# EUROPEAN PATENT APPLICATION

(11) **EP 4 759 634 A1**
(43) Date of publication of application: **17.06.2026**
(21) Application number: 24383365.4
(22) Date of filing: 12.12.2024
(51) Int. Cl.: B60R 1/12

(54) **MIRROR HEAD FOR VEHICLES**

(71) Applicant: Ficosa Automotive, S.L.U., 08232 Viladecavalls, Barcelona (ES)
(72) Inventor: RUIZ ORTEGA, Nestor, 08032 VILADECAVALLS (ES)
(74) Representative: ZBM Patents - Zea, Barlocci & Markvardsen

(57) **Abstract**

The mirror head (100) comprises a mirror cover (110) and a lighting device (120) including a light source (130), a lens (140) for guiding light emitted by the light source (130) and a housing (150) for at least receiving the light source (130) and the lens (140). The lens (140) comprises a main portion (140a) arranged between the housing (150) and the mirror cover (110) and terminal portion (140b) integrally formed with the main portion (140a) that can be viewed from the outside of the mirror head (100) for radiating light from the light source (130) outwards the mirror cover (110).

## Description

The present disclosure relates to rear-view mirrors, and specifically to exterior rear-view mirrors for motor vehicles. More in particular, the present disclosure relates to a rear-view-mirror head or mirror head, for such rear-view mirrors.

### BACKGROUND

Vehicle exterior rear-view mirrors typically comprise a mirror head that uses to be rotatably connected to a mirror base which, in turn, is attached to a vehicle body.

Said exterior rear-view mirrors are currently equipped with lighting parts such as turn signals. In such rear-view mirrors, the mirror head includes a mirror cover and a lighting device comprising a light source. A lens is provided for guiding light emitted by the light source. A housing is also provided for at least partially receiving at least the light source and the lens.

The lens in said known rear-view mirrors is typically a light guide that is configured to transmit the light emitted by the light source along the extension thereof away from the light source.

One of the major disadvantages in such known rear-view mirrors is that light usually scatters towards the interior of the mirror head causing discomfort to the user and even to other drivers or people in the surroundings.

A rear-view mirror refers herein to any exterior wing attached to a motor vehicle including a mirror, a camera, a device for at least obtaining information from the sides and the rear of the vehicle such as a radar, a lidar, or a combination thereof. A mirror head refers herein to an element to which any of said mirror, camera, and information obtaining device may be mounted.

### SUMMARY

An improved rear-view mirror head is disclosed herein, in particular but not exclusively for motor vehicle exterior rear-view mirrors, with which the above disadvantages found in the prior art are at least mitigated, in addition to providing a number of additional advantages over the existing mirror heads.

The present mirror head comprises a mirror cover, and a lighting device. The mirror cover may be formed of one or more parts. The lighting device includes a light source, a lens for guiding light emitted by the light source, and a housing for at least receiving thereon the light source and the lens. In one example, at least one of the housing and the mirror cover is made of an opaque material.

The light source is arranged in the interior of the housing and may be supported by an electronics carrier, that is, a printed circuit board (PCB). The light source may be, for example, a LED. The lens is configured for diffusing, transmitting or radiating light from the light source and distributing it to the exterior.

The housing may be made for example of an Acrylonitrile Butadiene Styrene (ABS) plastic material. Other suitable materials are possible such as, for example, polymethyl methacrylate (PMMA), polycarbonate (PC), or transparent polyamide (PA). The housing is configured for receiving at least partially the light source and the electronics carrier.

The lens of the present rear-view mirror head comprises a main portion and a terminal portion. Both portions are integrally formed with each other. The main portion of the lens is closer to the light source and preferably arranged between the housing and the mirror cover. For its part, the terminal portion of the lens is arranged such that it can be viewed from the outside of the mirror head. In one preferred example, a portion of the terminal portion of the lens is arranged flush with the mirror cover.

The housing may be provided with a first opening for receiving one or more of a mirror, a camera, and an information receiving device. The housing may be provided with a second opening from which the terminal portion can be viewed from the outside.

The terminal portion of the lens has at least one translucent area whose degree of transparency is lower than that of the main portion of the lens. A degree of transparency of the translucent area may be, for example, 5-85%, 10-70%, or 20-50%. Other suitable values are possible. As a result, light is radiated by the terminal portion of the lens from the light source outwards the mirror cover preventing sunlight from being reflected to the interior of the mirror head. No residual light spots are formed avoiding disturbances to the driver or the passenger.

The translucent area of the lens may be made of the same or different material as the main portion of the lens, or they may be made of the same material, but with different properties in terms e.g. of colors, textures, and so on.

The translucent area in the terminal portion of the lens is preferably formed at least in an outermost region of the terminal portion of the lens including a region visible from the outside of the mirror head. It is possible in some cases that the translucent area is formed in the whole terminal portion, that is, the complete terminal portion is translucent.

The lens is preferably made by a double-injection molding process. Double-injection molding process or two-shot molding is a known injection molding technique, also referred to as bi-material injection process, that combines supplying a first material for the main portion and a second different material for at least the translucent area of the terminal portion in a single molding cycle. For example, the terminal portion may include an area made of the first material, or the entire terminal portion may be formed of the second material.

Preferably, at least one of the main portion and the translucent area of the lens is preferably made of at least one of a polymethyl methacrylate (PMMA), a polycarbonate (PC) or a transparent polyamide (PA). Other suitable materials such as ABS can be used.

The main portion and the translucent area of the lens may be made of the same material. For example, it may be the case in which the main portion is made of a first polymethyl methacrylate and the translucent area is made e.g. of a second, different polymethyl methacrylate. Other combinations of materials are also possible.

According to one advantageous example of the present mirror head, a frame is further provided. The frame is arranged adjacent to the mirror cover along at least a portion of a perimeter edge of the mirror cover.

The frame comprises a frame inner projection extending to an interior of the mirror cover. Said frame inner projection is arranged substantially covering a surface of the terminal portion of the lens facing the interior of the mirror cover. The terminal portion of the lens is thus arranged between the above-mentioned frame inner projection and the mirror cover. The interior of the mirror cover refers herein to the inner space formed in the mirror cover facing the interior of the vehicle where the mirror head is mounted.

The frame covers the lens preventing light transmission to areas of the mirror such as the interior of the mirror cover, advantageously avoiding light form the lighting device going out of the mirror head through erroneous places, for example, joining areas between different elements such as between frame and mirror glass/camera, etc.

Said frame inner projection may be configured having opposed frame walls. The opposed frame walls may be formed extending so as to cover side regions of the terminal portion of the lens. The opposed frame walls may be parallel to each other extending perpendicular to the frame inner projection. The inner projection together with the opposed frame walls enclose at least partially the terminal portion of the lens.

In one advantageous example, end walls may extend from the housing so as to at least partially cover the main portion of the lens. Said end walls preferably extend between the housing and the mirror cover. The end walls of the housing thus protect and guide the main portion of the lens.

In some cases, it may be preferred that at least one portion of the frame inner projection is arranged adjacent to or overlapping the housing. More specifically, the above-mentioned opposed frame walls of the frame inner projection are arranged adjacent to or overlapping the end walls of the housing. Other parts of the frame inner projection may be also adjacent to or overlapping the housing.

However, in other cases, it may be preferred that at least one portion of the frame inner projection is arranged separated from the housing such that a gap is formed there between. Said gap is preferred to be smaller than 2.0 mm, most preferably smaller than 1 mm. Still most preferably, the gap is 0.5 mm.

The surface of the frame inner projection is arranged facing the lens and/or the housing is a black-colored or has color similar to that of the cover. Including one or both of said features advantageously results in homogeneity of the assembly.

As stated above the present mirror head may include the lens with a terminal portion having a translucent area. Alternatively, or in addition, the present mirror head may include the above mentioned frame inner portion. It is thus envisaged that the present mirror head may include the lens with a terminal portion having a translucent area and also the above mentioned frame inner portion.

The frame prevents sunlight from reflecting to the interior of the mirror head with no residual light spots being produced which may cause disturbances to the driver, even reflections and false signals to other drivers or people in the surroundings. In addition, the terminal portion of the lens, and in particular the translucent area, prevents light reflections resulting from light entering the lens. Furthermore, the above-described configuration of the present mirror head results in a highly compact assembly that also enhances the aesthetic outer appearance of the mirror head since the terminal portion of the lens blends optically with at least an exterior surface of the mirror cover.

### BRIEF DESCRIPTION OF THE DRAWINGS

Non-limiting examples of the present disclosure will be described in the following, with reference to the appended drawings, in which:
Figure 1 is a perspective view of one example of a vehicle exterior rear-view mirror including the present mirror head;
Figure 2 is a fragmentary front view of one example of a mirror head according to the present disclosure;
Figure 3 is a perspective view of the mirror head shown in figure 2;
Figure 4 is a fragmentary perspective view of a first example of the translucent area in the lens terminal portion;
Figure 5 is a fragmentary perspective view of a second example of the translucent area in the lens terminal portion;
Figure 6 is a fragmentary perspective view of a first example of the arrangement of the frame inner projection with respect to the housing; and
Figure 7 is a fragmentary perspective view of a second example of the arrangement of the frame inner projection with respect to the housing.

### DETAILED DESCRIPTION OF EXAMPLES

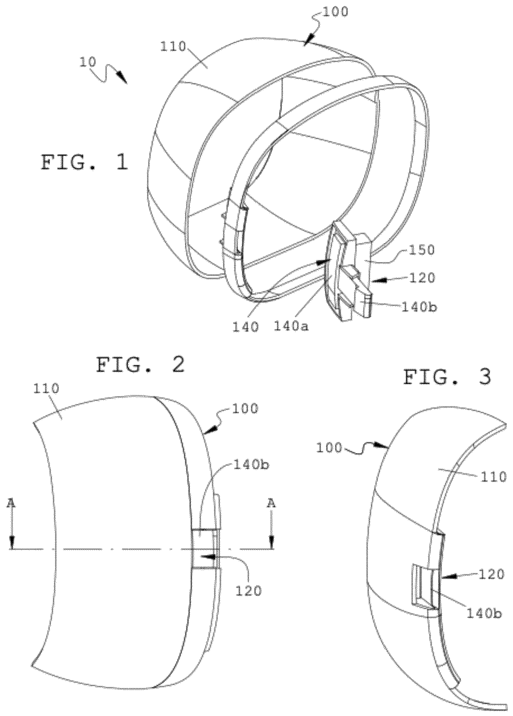

Referring to the figures 1-7 of the drawings, a mirror head 100 is provided. The mirror head 100 is intended to be fitted in a motor vehicle exterior rear-view mirror 10 such as the one shown in figure 1 of the drawings.

The mirror head 10 comprises a mirror cover 110. A lighting device 120 including a light source 130 is received within a housing 150 made, for example, of an Acrylonitrile Butadiene Styrene (ABS) plastic.

The light source 130 in the example shown includes a LED and an electronics carrier or PCB 135. Also, in the example shown, the housing 150 and the mirror cover 110 are made of an opaque material.

A lens 140 is also provided for guiding light emitted by the light source 130. The lens 140, at least partially, is also received within the housing 150, arranging a portion flush with the mirror cover 110.

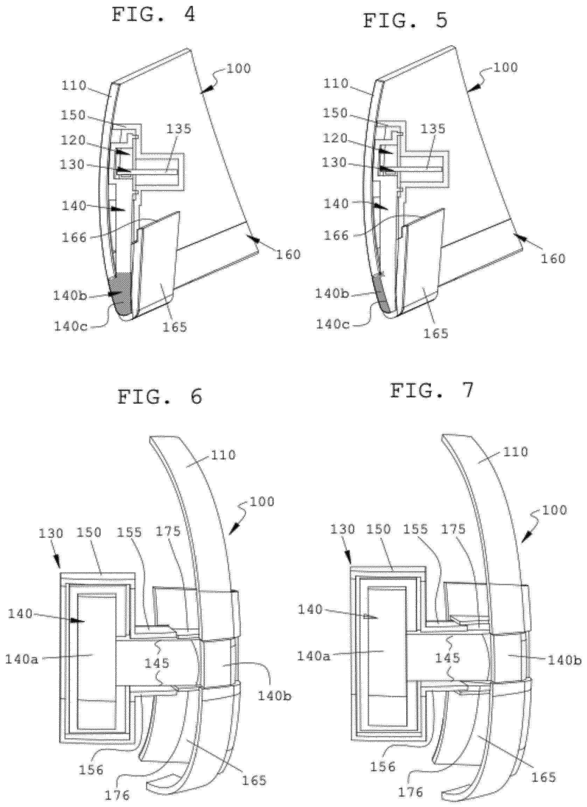

The lens 140 is configured for diffusing or radiating light from the light source 130 and distributing it to the exterior. In particular, the lens 140 comprises a main portion 140a and a terminal portion 140b as shown in figures 4-7 of the drawings.

The main portion 140a and the terminal portion 140b of the lens 140 are integrally formed with each other. The main portion 140a of the lens 140 is arranged between the housing 150 and the mirror cover 110. The terminal portion 140b of the lens 140 is arranged such that at least a portion of it can be viewed from the outside of the mirror head 100. As stated above, the lens 140 and, in particular, the terminal portion 140b thereof, is arranged flush with the mirror cover 110.

The portion of the lens 140 that is flush with the mirror cover 110 is optically similar to the portion of the mirror cover 110 that at least partially surrounds said portion of the lens 140.

The mirror cover 110 may include an opening or indentation or notch so that the terminal portion 140b can be at least partially seen from the outside and preferably so that at least a portion thereof can be arranged flush with the mirror cover 100. As a result, one portion of the terminal portion 140b is covered by the mirror cover 110 and another portion of the terminal portion 140b is arranged flush therewith.

The terminal portion 140b of the lens 140 has at least one translucent area 140c as shown in figures 4 and 5 of the drawings. Said translucent area 140c formed in the terminal portion 140b of the lens 140 has a degree of transparency that is in general lower than a degree of transparency of the main portion 140a of the lens 140. In the example shown, the degree of transparency of the translucent area 140c in the terminal portion 140b of the lens 140 is 5-85%. The terminal portion 140b of the lens 140 may be tinted in color such as blue, white, black, or any other any suitable color. As a result, sunlight incident on the lens 140 is prevented from being reflected to the interior of the mirror head 100. This prevents residual light spots from being formed avoiding disturbances to the driver, the passenger or other users. Such configuration ensures suitable light radiation from the light source 130 to the terminal portion 140b of the lens 140 outwards the mirror cover 110.

The lens 140 in this example is made by a double-injection molding process in which the material of the main portion 140a and the material of the terminal portion 140b of the lens 140 are combined.

Materials from which at least one of the main portion 140a and the translucent area 140c may be made at least one of a polymethyl methacrylate (PMMA), a polycarbonate (PC) or a transparent polyamide (PA). Both the main portion 140a and the translucent area 140c may be made of the same materials having different properties, for example. The lens 140 is generally made of a UV resistant material, above all the translucent area 140c.

The housing 150 has end walls 155, 156 extending between the housing 150 and the mirror cover 110 partially covering the main portion 140a of the lens 140, as shown in figures 6 and 7 of the drawings.

The housing 150 includes at least a base for receiving the lens 140. The lens 140 is thus received in the housing 150 such that it is arranged between the base and the mirror cover 110.

Referring again to figures 4 and 5 of the drawings, a frame 160 is provided. Said frame 160 may be part of the mirror cover 110 or formed adjacent thereto along at least a portion of a perimeter edge of the mirror cover 110. The frame 160 is received in an opening, as shown in figure 1, formed in the mirror cover 110.

The frame 160 comprises a frame inner projection 165 as shown in figures 4 and 5 of the drawings. Said frame inner projection 165 is extending to an interior of the mirror cover 110 covering a surface of the terminal portion 140b of the lens 140 facing said interior of the mirror cover 110. The terminal portion 140b of the lens 140 is thus arranged between the above-mentioned frame inner projection 165 and the mirror cover 110. In this way, the frame 160 prevents light transmission to the interior of the mirror cover 100, avoiding disturbances to the driver.

In the example shown in figures 6 and 7, the frame inner projection 165 includes two opposed frame walls 175, 176 arranged extending parallel to each other to cover side regions of the terminal portion 140b of the lens 140. The opposed frame walls 175, 176 thus extend perpendicular to the frame inner projection 165 and are arranged as a continuation of the end walls 155, 156 of the housing 150.

Referring again to figures 4 and 5, two examples of the extension of the translucent area 140c in the terminal portion 140b of the lens 140 are shown. In both examples, the translucent area 140c is formed in an outermost region of the terminal portion 140b of the lens 140 including a region visible from the outside of the mirror head 100.

In the example shown in figure 4, the translucent area 140c of the terminal portion 140b is formed in an outermost region thereof including a region visible from the outside of the mirror head 100 up to the frame inner projection 165. In this case, the translucent area 140c corresponds to the complete terminal portion 140b.

In the example shown in figure 5, the translucent area 140c does not extend up to the frame inner projection 165 but in said terminal portion 140b through a thickness substantially corresponding to that of the mirror cover 110. In this case, the translucent area 140c corresponds to a portion of the terminal portion 140b and the translucent area 140c extends at least to 1 mm within an area covered by the mirror cover 110.

Reference is now made to the two examples of the arrangement of the frame inner projection 165 with respect to the housing shown in figures 6 and 7.

In the example shown in figure 6, a portion of the frame inner projection 165 is arranged adjacent to the housing 150. In this example, in particular, the opposed frame walls 175, 176 of the frame inner projection 165 are arranged adjacent to the end walls 155, 156 of the housing 150. Although not shown in figures 6 and 7, a rear wall 166 of the frame inner projection 165, shown in figures 4 and 5, is also arranged adjacent the housing 150. The lens 140 is thus arranged between said rear wall 166 and the mirror cover 110.

The housing 150 comprises a base. As described above, the housing 150 includes end walls 155, 156. The above mentioned opposed frame walls 175, 176 are arranged adjacent the housing end walls 155, 156 extending as a continuation of one another. Similarly, the above-mentioned base of the housing 150 and said rear wall 166 are also arranged adjacent to each other.

In the cases above, at least one portion of the frame inner projection 165 may be arranged separated from the housing 150 such that a 0.5-2.0 mm gap is formed there between.

Figure 7 shows an alternative example where a portion of the frame inner projection 165 is arranged overlapping the housing 150 instead of being adjacent. In this example, in particular, the opposed frame walls 175, 176 of the frame inner projection 165 are arranged overlapping the end walls 155, 156 of the housing 150. Although not shown in figures 6 and 7, a rear wall 166 of the frame inner projection 165, shown in figures 4 and 5, is also arranged overlapping the base of the housing 150.

Non-limiting examples of the present mirror head have been disclosed herein. However, other alternatives, modifications, uses and/or equivalents thereof are envisaged. All possible combinations of the described examples are also included. The scope of the present disclosure should not be limited by particular examples but should be determined only by a fair reading of the claims that follow.

Reference signs related to the drawings placed in parentheses in a claim are solely for attempting to increase the intelligibility and shall not be construed as limiting the scope of the claim.

## Claims

1. Mirror head (100) comprising:
- a mirror cover (110);
- a lighting device (120) including:
- a light source (130);
- a lens (140) for guiding light emitted by the light source (130); and
- a housing (150) for at least receiving, at least partially, the light source (130) and the lens (140);
wherein the lens (140) comprises:
- a main portion (140a) arranged between the housing (150) and the mirror cover (110); and
- a terminal portion (140b) integrally formed with the main portion (140a) and arranged such that it can be viewed from the outside of the mirror head (100) for radiating light from the light source (130) outwards the mirror cover (110);
wherein the terminal portion (140b) of the lens (140) has at least one translucent area (140c) whose degree of transparency is lower than that of the main portion (140a) of the lens (140).

2. Mirror head (100) of claim 1, wherein the translucent area (140c) is formed at least in an outermost region of the terminal portion (140b) of the lens (140) including a region visible from the outside of the mirror head (100).

3. Mirror head (100) of any preceding claim, wherein at least one of the main portion (140a) and the terminal portion (140b) of the lens (140) is made of at least one of a polymethyl methacrylate (PMMA), a polycarbonate (PC) or a transparent polyamide (PA).

4. Mirror head (100) of any preceding claim, wherein the lens (140) is made by a double-injection molding process.

5. Mirror head (100) of any preceding claim, wherein a degree of transparency of the translucent area (140c) is 5-85%.

6. Mirror head (100) of any preceding claim, wherein it further includes a frame (160) arranged adjacent to the mirror cover (110) along at least a portion of a perimeter edge of the mirror cover (110).

7. Mirror head (100) of claim 6, wherein an opening is formed in the mirror cover (110) for receiving a reflective mirror and the frame (160).

8. Mirror head (100) of claim 7, wherein the frame (160) comprises a frame inner projection (165) extending to an interior of the mirror cover (110) substantially covering a surface of the terminal portion (140b) of the lens (140) facing the interior of the mirror cover (110), wherein the terminal portion (140b) of the lens (140) is arranged between the frame inner projection (165) and the mirror cover (110).

9. Mirror head (100) of claim 8, wherein the frame inner projection (165) has opposed frame walls (175, 176) extending so as to cover side regions (145) of the terminal portion (140b) of the lens (140).

10. Mirror head (100) of any preceding claim, wherein the housing (150) includes end walls (155, 156) extending so as to at least partially cover the main portion (140a) of the lens (140).

11. Mirror head (100) of claim 10, wherein at least one portion of the frame inner projection (165) is arranged adjacent to or overlapping the housing (150).

12. Mirror head (100) of claim 10, wherein at least one portion of the frame inner projection (165) is arranged separated from the housing (150) such that a gap is formed there between.

13. Mirror head (100) of claim 12, wherein the gap is smaller than 2.0 mm, preferably the gap is smaller than 1 mm, most preferably the gap is 0.5 mm.

14. Mirror head (100) of any preceding claim, wherein at least one of the housing (150) and the mirror cover (110) is made of an opaque material.

15. Mirror head (100) of any of the claims 9-14, wherein the opposed frame walls (175, 176) are parallel to each other and extend perpendicular to the frame inner projection (165).
